# EUROPÄISCHE PATENTSCHRIFT

(11) **EP 0 882 763 B1**
(45) Veröffentlichungstag und Bekanntmachung des Hinweises auf die Patenterteilung: **04.10.2001**
(21) Anmeldenummer: 98110155.3
(22) Anmeldetag: 04.06.1998
(51) Int. Cl.: C08K 9/04, C08L 59/00

(54) **Farbige Polyacetalformmasse mit verringerter Emission von Spaltprodukten**
Colored polyacetal molding composition with a reduced emission of cleavage products
Composition à mouler colorée à base de polyacétal ayant une émission réduite des produits du clivage

(30) Priorität: 05.06.1997 DE 19723592
(43) Veröffentlichungstag der Anmeldung: 09.12.1998
(73) Patentinhaber: Ticona GmbH, 65451 Kelsterbach (DE)
(72) Erfinder: Hoffmockel, Michael, Dr., Corpus Christi, Texas 78413-2272 (US)

(56) Entgegenhaltungen:
- EP-A- 0 593 219
- US-A- 3 803 065
- US-A- 3 956 562
- US-A- 4 985 287
- PATENT ABSTRACTS OF JAPAN vol. 013, no. 442 (C-641), 3.Oktober 1989 & JP 01 170641 A (POLYPLASTICS CO), 5.Juli 1989,

## Beschreibung

Die vorliegende Erfindung betrifft eine Polyacetalformmasse, die neben dem Polymeren zusätzlich mindestens ein anorganisches oder organisches Pigment oder eine Kombination daraus enthält.

Thermoplastische Formmassen aus Acetalhomo- und -copolymeren wie Polyoxymethylen werden seit langem als vielseitige Werkstoffe vor allem im Automobilbau häufig eingesetzt. Sie eignen sich wegen ihrer hervorragenden mechanischen Eigenschaften, wie hoher Steifigkeit, Härte und Festigkeit sowie der Möglichkeit, Formteile und Formkörper in engen Toleranzgrenzen herzustellen, für vielfältige Einsatzzwecke.

Mit zunehmender Dringlichkeit fordern die Hersteller von Automobilen, daß die Emission von möglichen Spaltprodukten, die von Polyacetalformteilen ausgeht, stärker als bisher vermindert oder sogar ganz eliminiert wird. Im Innenraum von Automobilen wird Polyacetal in letzter Zeit in verstärktem Maße für Sichtteile eingesetzt. Aus diesem Grunde besteht neben der Forderung niedriger Emission auch die Notwendigkeit, den Kunststoff in jeder gewünschten Farbe bereitzustellen. Die Farben werden durch Zusatz organischer und anorganischer Pigmente eingestellt. Aus diesem Grunde ist der Zusatz der Pigmente unerläßlich.

Pigmentiertes Polyacetal weist aber mitunter höhere Emissionen von Spaltprodukten auf als Polyacetal, das keine derartigen Pigmente enthält. Der Grund hierfür ist in den anorganischen Pigmenten zu sehen, wenn sie saure Reaktionszentren aufweisen, die dann während der Verarbeitung zum Bruch der Polymerketten und in dessen Folge zur Freisetzung von Spaltprodukten führen.

Bei Füllstoffen, die in der Regel eingesetzt werden, um die Polymermatrix zu verstärken, ist eine Oberflächenbehandlung bekannt. So ist bei Polyacetal der Einsatz von Füllstoffen - z.B. Oxide, Hydroxide, Carbonate, Sulfate der 2. und 3. Gruppe des Periodischen Systems oder Siliciumdioxid - beschrieben, die mit Fettsäuren oder deren Salzen überzogen sind, um die Transluzenz der Formkörper zu vermindern (JP-A-01-170 641).

Aufgabe der Erfindung war es, die bekannten Nachteile zu vermeiden.

Die Aufgabe wurde durch die vorliegende Erfindung gelöst.

Die Erfindung betrifft eine thermoplastische Formmasse aus a) einem Polyacetal und b) mindestens einem anorganischen oder organischen Pigment, das einen Überzug eines Alkalimetallsalzes einer Fettsäure mit mindestens 12 C-Atomen trägt.

Durch die Erfindung ist es gelungen, eine Polyacetalformmasse zur Verfügung zu stellen, die trotz der Einfärbung durch organische oder anorganische Pigmente eine verminderte Emission von Spaltprodukten aufweist..

Als Polyacetal (Komponente a), welches in der Formmasse Verwendung findet, eignen sich vorzugsweise die bekannten Polyoxymethylene (POM), wie sie beispielsweise in der DE-A 29 47 490 beschrieben sind. Es handelt sich hierbei im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen 1) cyclische Äther mit 3, 4 oder 5, vorzugsweise 3 Ringgliedern, 2) von Trioxan verschiedene cyclische Acetale mit 5 bis 11, vorzugsweise 5, 6, 7 oder 8 Ringgliedern und 3) lineare Polyacetale, jeweils in Mengen von 0,1 bis 20, vorzugsweise 0,5 bis 10 Mol.-%, in Frage. Am besten eignen sich Copolymere aus 99,5 - 95 Mol.-% Trioxan und 0,5 bis 5 Mol.-% einer der vorgenannten Cokomponenten.

Die eingesetzten Polyacetal-Polymere haben im allgemeinen einen Schmelzindex (MFR-Wert 190/2, 16) von 2 bis 50 g/10 min (DIN 53735).

Die Formmasse gemäß der Erfindung kann gegebenenfalls noch bekannte, übliche Zusatzstoffe wie Stabilisatoren, Nukleierungsmittel, Antistatika, Lichtschutzmittel, Gleit- und Schmiermittel, Verarbeitungshilfsmittel und dergleichen enthalten, deren Menge bis zu 10 Gew.%, vorzugsweise bis zu 5 Gew.-%, bezogen auf die Gesamtmischung, betragen kann.

Als organische und anorganische Pigmente können prinzipiell alle diejenigen zur Anwendung kommen, die in der Polyacetalmatrix unlöslich sind und neutralen bis basischen Charakter aufweisen. Die Pigmente gemäß der Erfindung sind mit einem Überzug versehen, der mindestens 3 Gew.-%, vorzugsweise 4 bis 10 Gew.-%, an Alkalimetallsalz einer Fettsäure, bezogen auf die Menge des Pigments, enthält. Als Alkalimetall wird im allgemeinen Natrium und Kalium genannt. Die verwendeten Fettsäuren entsprechen der Formel CₙH₂ₙ₊₁-COOH und sind beispielsweise Fettsäuren mit wenigstens 12, vorzugsweise 12 bis 30 C-Atomen, wie Stearinsäure. Das Pigment oder die Pigmentmischungen sind in der erfindungsgemäßen Formmasse in einer Menge von 0,05 bis 3 Gew.-%, vorzugsweise 0,2 bis 2 Gew.-%, enthalten, bezogen auf das Gesamtgewicht der Formmasse. Als Alkalimetallsalz der Fettsäure wird vorzugsweise Natriumstearat eingesetzt.

Beim Aufbringen des Überzuges ist sicherzustellen, daß das Alkalimetallsalz die Pigmentpartikel vollständig einhüllt. Dieses kann beispielsweise durch Lösen des Salzes in einem Lösemittel wie Methanol, Aufschlämmen des Pigments in der Lösung und anschließender Entfernung des Lösemittels durch Trocknung unter vermindertem Druck oder Sprühtrocknung geschehen.

Zur Bestimmung der Emission von Spaltprodukten wurde die folgende Methode angewandt: Aus Material wurden Platten von 60x40x1 mm³ spritzgegossen. Die Platten wurden in einem Polyethylenbeutel einen Tag luftdicht abgeschlossen gelagert und am Folgetag dem Test nach VDA 275 (Verband der Automobilindustrie e.V. (VDA) Juli 1994) unterzogen (jeweils 2 Platten).

Diese Formmassen gemäß der Erfindung weisen eine verminderte Emission von Spaltprodukten auf und können wie die handelsüblichen Polyacetale durch Spritzguß oder Extrusion verarbeitet werden. Die Herstellung von Formkörpern kann direkt durch Spritzguß erfolgen. Die Materialien sind aber ebenso gut geeignet für die Extrusionsverarbeitung. Die endgültige Formgebung erfolgt dann durch die Bearbeitung der extrudierten Halbzeuge. Blasformverfahren wie Extrusionsblasen oder Streckblasen können zur Verarbeitung der beschriebenen Materialien ebenfalls eingesetzt werden.

### Beispiele

1a-h) Eine bestimmte Menge Natriumstearat wurde in 400 g Methanol gelöst (Tab. 1). Zu dieser Lösung wurden 70 g Titandioxid(C.I. Pigment White 6) (®Kronos 2220, Hersteller Kronos, Leverkusen, Deutschland) gegeben, 15 Minuten bei Raumtemperatur stehen gelassen und anschließend das Methanol am Rotationsverdampfer unter vermindertem Druck bei 50°C entfernt.

Eine jeweils 60 g unbehandeltem Titandioxid entsprechende Menge der vorstehend erhaltenen Produkte der Beispiele 1a-h) wurde mit 40 g einer Stabilisatormischung versetzt und mit Polyacetalpulver, MFR-Wert (190/2,16) etwa 30, auf 4 kg Mischung ergänzt. Die Mischung wurde 15 Minuten trocken homogenisiert und anschließend auf einem Zweischneckenextruder zu Granulat verarbeitet. Das erhaltene Granulat wurde mittels des o.a. Test VDA 275 charakterisiert (Tab. 1). Der Meßwert nimmt linear mit steigender Natriumstearatkonzentration ab.

**Tabelle 1**

| Beispiel | Titandioxid [g] | Natriumstearat | | VDA 275 [mg/kg] |
|---|---|---|---|---|
| | | [g] | [%] | |
| 1-a | 70 | 0 | 0 | 151 |
| 1-b | 70 | 0.035 | 0.05 | 145 |
| 1-c | 70 | 0.07 | 0.1 | 153 |
| 1-d | 70 | 0.14 | 0.2 | 150 |
| 1-e | 70 | 0.35 | 0.5 | 139 |
| 1-f | 70 | 0.7 | 1 | 125 |
| 1-g | 70 | 1.4 | 2 | 92 |
| 1-h | 70 | 3.5 | 5 | 26 |

2a-c) Wie in Beispiel 1 wurde eine bestimmte Menge Natriumstearat in 400 g Methanol gelöst (Tab. 2). Zu dieser Lösung wurden 50 g Ultramarinblau (C.I. Pigment Blue 29) (Hersteller: Fa. Holiday, Kingston upon Hull, England) gegeben, 15 Minuten bei Raumtemperatur stehen gelassen und anschließend das Methanol am Rotationsverdampfer unter vermindertem Druck bei 50°C entfernt.

Eine jeweils 40 g unbehandeltem Ultramarinblau entsprechende Menge der erhaltenen Produkte der Beispiel 2a-c) wurde mit 40 g einer Stabilisatormischung und mit Polyacetalpulver, jeweils wie in Beispiel 1, auf 4 kg Mischung ergänzt. Die Mischung wurde 15 Minuten in trocknem Zustand homogenisiert und anschließend auf einem Zweischneckenextruder zu Granulat verarbeitet. Das erhaltene Granulat wurde mittels des o.a. Tests VDA 275 charakterisiert (Tab. 2). Ebenso wie in Beispiel 1 nimmt der Meßwert linear mit steigender Natriumstearatkonzentration ab.

**Tabelle 2**

| Beispiel | Ultramarinblau [g] | Natriumstearat | | VDA 275 [mg/kg] |
|---|---|---|---|---|
| | | [g] | [%] | |
| 2-a | 50 | 0 | 0 | 167 |
| 2-b | 50 | 1.25 | 2.5 | 143 |
| 2-c | 50 | 2.5 | 5 | 94 |

## Patentansprüche

1. Thermoplastische Formmasse, **dadurch gekennzeichnet, daß** sie a) ein Polyacetal und b) mindestens ein anorganisches oder organisches Pigment enthält, das einen Überzug eines Alkalimetallsalzes einer Fettsäure mit mindestens 12 C-Atomen trägt.

2. Formmasse gemäß Anspruch 1, **dadurch gekennzeichnet, daß** die Komponente a) ein Acetalhomo- oder -copolymer ist.

3. Formmasse gemäß Anspruch 1 oder 2, **dadurch gekennzeichnet, daß** die Formmasse als Komponente b) 0,05 bis 3 Gew.-%, vorzugsweise 0,2 bis 2 Gew.-% Pigment enthält.

4. Formmasse gemäß einem oder mehreren der Ansprüche 1 bis 3, **dadurch gekennzeichnet, daß** das Pigment neutralen bis basischen Charakter besitzt.

5. Formmasse gemäß einem oder mehreren der Ansprüche 1 bis 4, **dadurch gekennzeichnet, daß** der Überzug der Pigmente mindestens 4 Gew.-% eines Alkalimetallsalzes einer Fettsäure enthält und die Fettsäure 12 bis 30 C-Atome aufweist.

6. Formmasse gemäß einem oder mehreren der Ansprüche 1 bis 5, **dadurch gekennzeichnet, daß** das Alkali Natrium oder Kalium und die Fettsäure Stearinsäure ist.

7. Verwendung der Formmasse gemäß einem oder mehreren der Ansprüche 1 bis 6 zur Herstellung von Formkörpern mit verminderter Emission von Spaltprodukten.

## Claims

1. A thermoplastic molding composition, which comprises a) a polyacetal and b) at least one inorganic or organic pigment carrying a coating of an alkali metal salt of a fatty acid having at least 12 carbon atoms.

2. A molding composition as claimed in claim 1, wherein component a) is an acetal homo- or copolymer.

3. A molding composition as claimed in claim 1 or 2, wherein the molding composition comprises as component b) from 0.05 to 3% by weight, preferably from 0.2 to 2% by weight, of pigment.

4. A molding composition as claimed in one or more of claims 1 to 3, wherein the pigment has neutral to basic character.

5. A molding composition as claimed in one or more of claims 1 to 4, wherein the coating of the pigments comprises at least 4% by weight of an alkali metal salt of a fatty acid and the fatty acid has from 12 to 30 carbon atoms.

6. A molding composition as claimed in one or more of claims 1 to 5, wherein the alkali metal is sodium or potassium and the fatty acid is stearic acid.

7. The use of the molding composition as claimed in one or more of claims 1 to 6 for producing shaped articles with reduced emission of cleavage products.

## Revendications

1. Matière pouvant être moulée thermoplastique, **caractérisée en ce qu'**elle contient a) une polyacétal et b) au moins un pigment inorganique ou organique, qui porte un revêtement d'un sel de métal alcalin d'un acide gras ayant au moins 12 atomes de C.

2. Matière pouvant être moulée selon la revendication 1, **caractérisée en ce que** le composant a) est un homopolymère ou un copolymère d'acétal.

3. Matière pouvant être moulée selon la revendication 1 ou 2, **caractérisée en ce que** la matière pouvant être moulée contient en tant que composant b) de 0,05 à 3% en poids, de préférence de 0,2 à 2% en poids de pigment.

4. Matière pouvant être moulée selon l'une quelconque des revendications 1 à 3, **caractérisée en ce que** le pigment possède un caractère neutre à basique.

5. Matière pouvant être moulée selon l'une quelconque des revendications 1 à 4, **caractérisée en ce que** le revêtement des pigments contient au moins 4% en poids d'un sel de métal alcalin d'un acide gras et que l'acide gras présente de 12 à 30 atomes de C.

6. Matière pouvant être moulée selon l'une quelconque des revendications 1 à 5, **caractérisée en ce que** l'alcalin est le sodium ou le potassium et que l'acide gras est l'acide stéarique.

7. Utilisation de matières pouvant être moulées selon l'une quelconque des revendications 1 à 6, en vue de la fabrication de corps de moules ayant une émission réduite de produits de clivage.
